(19) **Europäisches Patentamt / European Patent Office / Office européen des brevets**

(11) **EP 2 434 119 B1**

(12) **FASCICULE DE BREVET EUROPEEN**

(45) Date de publication et mention de la délivrance du brevet:
**15.04.2015 Bulletin 2015/16**

(51) Int Cl.:
***F01N 3/20*** *(2006.01)*

(21) Numéro de dépôt: **11176459.3**

(22) Date de dépôt: **03.08.2011**

(54) **Procédé d'amorçage d'un système de réduction catalytique sélective pour un véhicule système et véhicule correspondant**

Ansaugverfahren eines Systems mit selektiver katalytischer Reduktion für ein Fahrzeugsystem und entsprechendes Fahrzeug

Method for priming a selective catalytic reduction system for a vehicle, corresponding system and vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2010 FR 1057837**

(43) Date de publication de la demande:
**28.03.2012 Bulletin 2012/13**

(73) Titulaire: **Peugeot Citroën Automobiles SA 78140 Vélizy-Villacoublay (FR)**

(72) Inventeur: **Lee, Eric 94210 LA VARENNE SAINT HILAIRE (FR)**

(74) Mandataire: **Ménès, Catherine Peugeot Citroën Automobiles SA PI (LG081) 18, rue des Fauvelles 92250 La Garenne-Colombes (FR)**

(56) Documents cités:
**FR-A1- 2 925 581        US-A1- 2006 283 177**
**US-A1- 2009 050 109        US-B1- 6 209 315**
**US-B2- 6 550 250**

**Description**

L'invention se rapporte à un procédé d'amorçage d'un système de réduction catalytique sélective pour véhicule. L'invention concerne également un système de réduction catalytique sélective apte à mettre en oeuvre le procédé, et un véhicule comprenant le système.

Dans un contexte de dépollution des gaz d'échappement d'un moteur diesel, les systèmes de réduction catalytique sélective (ou SCR pour « Selective Catalyst Reduction » en anglais) ont pour but de réduire les oxydes d'azote ($NO_x$) contenus dans les gaz d'échappement. Le système SCR utilise une réaction chimique entre ces mêmes $NO_x$ et un réducteur. Classiquement le réducteur est de l'ammoniac ($NH_3$). L'ammoniac est injecté à la ligne d'échappement des gaz. L'injection de l'ammoniac peut être réalisée par l'intermédiaire d'une autre espèce chimique telle que l'urée.

L'urée liquide a pour principal inconvénient de geler pour des températures inférieures à -11 °C. Les composants principaux du système SCR ne résistent pas tous au gel du réducteur, d'où la nécessité de purger le circuit du système SCR. Cette purge concerne aussi bien le module permettant de jauger la pompe, que la canalisation ou l'injecteur. Lors de la purge, ces composants sont vidés du réducteur qu'ils contiennent. Au retour de conditions hors gel, le système SCR est amorcé, c'est-à-dire du réducteur est réintroduit dans le circuit du système SCR.

On connaît des documents FR 2 925 581 A, US-B-6209315, US-B-6550250, et US-A-2005/0252201 des systèmes SCR comprenant un accumulateur, qui stocke un volume défini de réducteur sur une plage de pression désirée. Par exemple, dans un tel accumulateur, la pression du réducteur est obtenue à l'aide d'un piston. Un capteur de position continu évalue la position du piston. L'accumulateur présente un volume utile déterminé à partir de butées haute et basse du piston. L'accumulateur est rechargé en réducteur lorsque le piston est arrivé à la butée basse, c'est-à-dire lorsque le volume utile est consommé. Il serait avantageux de réaliser un système d'amorçage utilisant les propriétés de l'accumulateur.

Il existe donc un besoin pour un procédé d'amorçage pour un système SCR comprenant un accumulateur de réducteur.

Pour cela, l'invention propose un procédé d'amorçage d'un système de réduction catalytique sélective pour un véhicule, le système de réduction catalytique sélective comprenant une pompe de réducteur, un injecteur de réducteur dans une ligne d'échappement du véhicule, une canalisation reliant l'injecteur à la pompe, un accumulateur de réducteur sous pression connecté à la canalisation, caractérisé en ce que le procédé comprend :

- une première fermeture de l'injecteur,
- la fourniture de réducteur dans la canalisation à partir de la pompe, jusqu'au chargement de l'accumulateur,
- la fermeture de la canalisation entre la pompe et l'accumulateur,
- l'ouverture de l'injecteur pour purger de l'air présent dans la canalisation sous l'effet du réducteur sous pression présent dans l'accumulateur.

Selon une variante, les étapes du procédé sont répétées lorsque le niveau de réducteur dans l'accumulateur atteint un niveau bas.

Selon une variante, le procédé comprend en outre, après l'étape d'ouverture de l'injecteur, une autre étape de fermeture de l'injecteur lorsque le système est purgé.

Selon une variante, le volume d'air purgé est estimé à l'aide du niveau de réducteur dans l'accumulateur.

Selon une variante, l'accumulateur comporte un piston de mise sous pression, le niveau de réducteur dans l'accumulateur étant déterminé selon la position du piston dans l'accumulateur.

Selon une variante, le système est purgé lorsque le volume de réducteur utilisé pour purger la canalisation atteint une valeur V fonction du volume d'air présent dans le système de réduction catalytique avant la première fermeture de l'injecteur, de la pression atmosphérique, et de la pression de l'accumulateur.

Selon une variante, le procédé comprend avant la première fermeture de l'injecteur,

- la détermination du volume d'air présent dans le système de réduction catalytique de la pression atmosphérique, et de la pression de l'accumulateur, et
- la détermination de la valeur V.

Selon une variante, la fermeture de la canalisation entre la pompe et l'accumulateur est commandée par une vanne, ou un clapet antiretour positionné entre la pompe et l'accumulateur.

L'invention concerne également un système de réduction catalytique sélective pour véhicule, comprenant une pompe de réducteur, un injecteur de réducteur dans une ligne d'échappement du véhicule, une canalisation reliant l'injecteur à la pompe, et un accumulateur de réducteur sous pression positionné sur la canalisation, caractérisé en ce que le système comprend une unité de commande apte à mettre en oeuvre le procédé selon l'invention.

L'invention concerne en outre un véhicule comprenant une ligne d'échappement caractérisé en ce que le véhicule comprend en outre le système de réduction catalytique sélective selon l'invention.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un organigramme présentant un exemple de procédé de selon l'invention ;
- figure 2, un système SCR dans une étape du procédé selon l'invention
- figure 3, le système SCR de la figure 2 dans une autre étape du procédé selon l'invention ;
- figure 4, le système SCR de la figure 2 dans encore une autre étape du procédé selon l'invention.

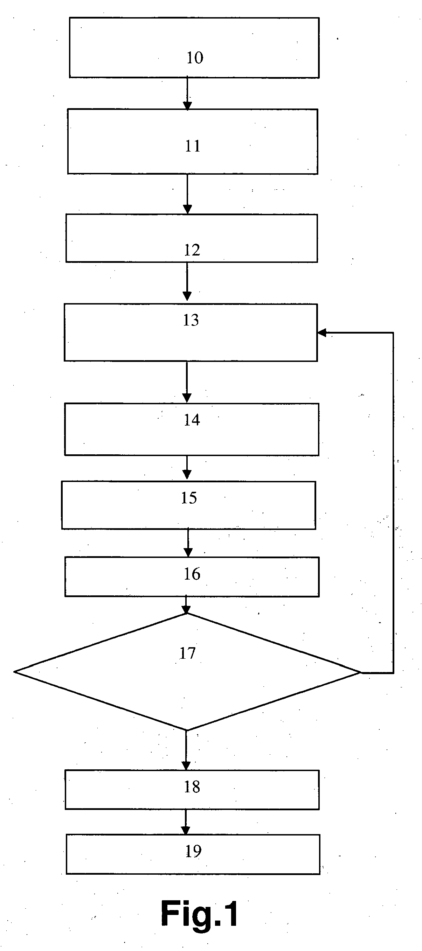

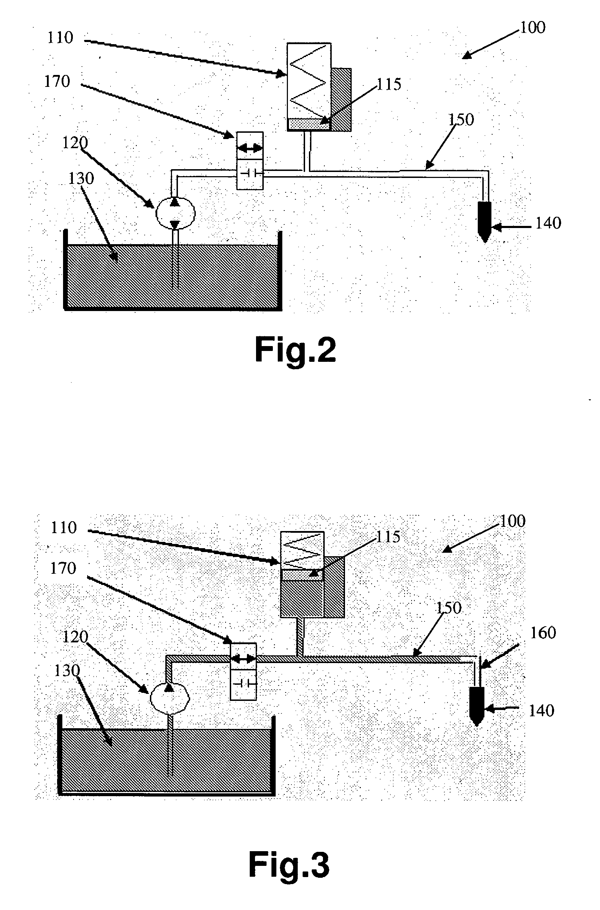

Le procédé d'amorçage selon l'invention sera mieux compris en faisant référence aux figures 1 à 4. La figure 1 présente les étapes d'un exemple du procédé selon l'invention. Les figures 2 à 4 présentent un système de réduction catalytique sélective (SCR) 100 qui met en oeuvre un procédé selon l'invention.

Le procédé d'amorçage selon l'invention est mis en oeuvre dans un système SCR 100 qui comprend un accumulateur 110 de réducteur sous pression, ou dans un système SCR fonctionnellement équivalent. Un tel système SCR 100 est adapté pour injecter du réducteur dans une ligne d'échappement (non représentée) d'un véhicule. Le système SCR 100 comprend une pompe 120 ou un module jauge-pompe de réducteur, pour amener du réducteur dans le système SCR 100 à partir d'un réservoir 130 de réducteur. Le système SCR 100 comprend également un injecteur 140 de réducteur dans la ligne d'échappement du véhicule. Une canalisation 150 relie l'injecteur 140 à la pompe 120. L'accumulateur 110 de réducteur sous pression est connecté à la canalisation 150. Dans l'exemple de système SCR 100 présenté dans les figures 2 à 4, l'accumulateur 110 comporte un piston 115 de mise sous pression.

Le procédé d'amorçage est mis en oeuvre dans le système SCR 100 lorsque de l'air est présent dans une partie ou la totalité du système SCR 100. Par exemple, en figure 2, le système SCR 100 présente de l'air dans l'injecteur 140, la canalisation 150, et la pompe 120. L'accumulateur 110 ne contient pas d'air. Autrement dit, le niveau de réducteur dans l'accumulateur 110 est à un niveau bas qui, dans l'exemple du système SCR 100, correspond à un niveau bas du piston 115.

Le procédé comprend une première étape 13 de fermeture de l'injecteur 140. L'air présent dans le système SCR 100 est conservé de manière étanche.

La figure 3 présente le système SCR dans l'étape suivante 14 de fourniture de réducteur dans la canalisation 150. La pompe 120 est tournante, c'est-à-dire dans un état tournant, afin de fournir le réducteur dans la canalisation 150. L'injecteur 140 étant fermé, le système SCR 100 est mis sous pression. Le réducteur fourni par la pompe 120 comprime l'air présent dans le système SCR 100 vers l'injecteur 140. Ainsi, un volume d'air sous pression 160 est localisé au niveau de l'injecteur 140. L'étape 14 de fourniture de réducteur dans le système SCR 100 est réalisée jusqu'au chargement de l'accumulateur 110. Autrement dit, l'étape 14 de fourniture de réducteur est réalisée jusqu'à ce que le niveau de réducteur atteigne un niveau haut. Dans le présent exemple de système SCR 100, le niveau haut de réducteur correspond à un niveau haut du piston 115. Le réducteur présent dans l'accumulateur 110 subi une pression exercée par le piston 115.

Le procédé comprend ensuite une étape 15 de fermeture de la canalisation 150 entre la pompe 120 et l'accumulateur 110. Ainsi, le réducteur ne circule plus entre d'une part l'accumulateur 110, et d'autre part le réservoir 130 de réducteur et la pompe 120. Le volume d'air 160 reste maintenu sous pression. Par exemple, l'étape 15 de fermeture est commandée par une vanne ou une électrovanne 170 positionnée entre la pompe 120 et l'accumulateur 110. Dans un autre exemple, la fermeture 15 de la canalisation 150 entre la pompe 120 et l'accumulateur 110 est commandée par un clapet antiretour. La pompe 120 est mise au repos.

On procède ensuite à une étape 16 d'ouverture de l'injecteur 140. L'étape 16 d'ouverture de l'injecteur 140 permet de purger l'air présent dans la canalisation 150. Le volume d'air 160 est expulsé hors de la canalisation 150, sous l'effet du réducteur sous pression présent dans l'accumulateur 110.

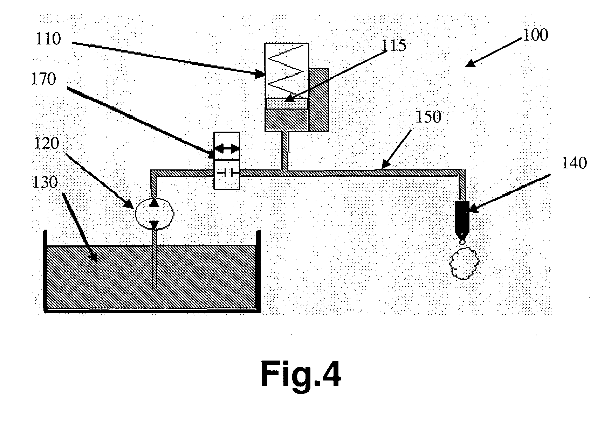

La figure 4 présente le système SCR 100 lorsque la purge d'air atteint son terme, c'est-à-dire lorsque l'expulsion du volume d'air 160 est en train de se terminer.

Dans un mode de réalisation, les étapes 13, 14, 15, 16 décrites ci-dessus sont répétées, lorsque le niveau de réducteur dans l'accumulateur 110 atteint le niveau bas. Autrement dit, l'accumulateur est rechargé si son volume utile ne permet pas d'expulser la totalité du volume d'air sous pression 160. Par volume utile on entend le volume compris entre le niveau haut et le niveau bas de réducteur dans l'accumulateur 110.

Dans un mode de réalisation, le procédé comprend une étape 17 d'estimation du volume d'air purgé. Le volume d'air purgé est estimé à l'aide du niveau de réducteur dans l'accumulateur 110. Au cours du procédé d'amorçage, un volume d'air purgé correspond à une diminution du volume de réducteur présent dans l'accumulateur 110. Mesurer le niveau de réducteur dans l'accumulateur 110 permet de connaître le volume de réducteur qui s'est écoulé de l'accumulateur 110 pour expulser le volume d'air 160, depuis le début de la procédure d'amorçage. Ainsi, on détermine le volume d'air purgé à un instant t.

En particulier, dans l'exemple de système SCR 100, on procède à une étape 17 d'estimation du volume d'air purgé sur la base d'une information sur la position du piston 115. L'accumulateur 110 comprend un capteur de position du piston 115. Le volume utile de l'accumulateur 110 est déterminé à partir des positions haute et basse du piston 115. Le niveau de réducteur dans l'accumulateur 110 est déterminé selon la position du piston 115 dans l'accumulateur 110. Ainsi, le capteur est utilisé comme un débitmètre pour estimer le volume d'air purgé.

Dans un mode de réalisation, on procède à une étape 18 de fermeture de l'injecteur 140, lorsque le système SCR 100 est purgé. Par exemple, le système SCR 100 est purgé lorsque le volume de réducteur utilisé pour purger la canalisation 150 atteint une valeur V. Autrement dit, le système SCR 100 est purgé lorsque le volume de réducteur qui s'est écoulé de l'accumulateur 110 depuis le début de la procédure d'amorçage atteint une valeur V. La valeur V est fonction du volume d'air $V_{atmo}$ présent dans le système SCR 100 avant la première fermeture de l'injecteur. Cette valeur V est également fonction de la pression atmosphérique $P_{atmo}$, et de la pression de l'accumulateur 110, encore appelée pression de maintien ou pression moyenne de service $P_s$.

A partir des caractéristiques de l'accumulateur 110, on détermine le niveau de réducteur dans l'accumulateur 110 correspondant à la valeur V. En particulier, dans le procédé mis en oeuvre dans l'exemple de système SCR 100, la valeur V est déterminée à partir de la géométrie de l'accumulateur 110. La position du piston 115 correspondant au volume V est identifiée. L'injecteur 140 est fermé à l'étape 18 lorsque le capteur détecte l'atteinte de cette position par le piston 115.

Dans un mode de réalisation, la valeur V est stockée dans une mémoire et n'est pas calculée lors de la mise en oeuvre du procédé. Ainsi, la durée de l'amorçage est réduite. Cette étape est particulièrement adaptée lorsque l'état du système SCR 100 avant la procédure d'amorçage est connu.

Dans un mode de réalisation, le procédé comprend une étape 10 de détermination du volume à amorcer $V_{atmo}$, de la pression moyenne de service $P_s$, et de la valeur constante $\gamma$ caractéristique du gaz contenu dans le système SCR 110, par exemple de l'air. Cette étape est particulièrement adaptée lorsque l'état de remplissage du système SCR 100 par de l'air, avant la procédure d'amorçage, n'est pas connu.

Le volume d'air $V_{atmo}$ présent dans le système SCR 100 avant la première fermeture de l'injecteur correspond au volume à amorcer, c'est-à-dire au volume supplémentaire qui sera occupé par le réducteur au terme de la procédure d'amorçage. Ce volume d'air est déterminé à une condition de pression atmosphérique $P_{atmo}$. Dans l'exemple de système SCR 100, le volume $V_{atmo}$ correspond essentiellement au volume intérieur de la canalisation 150 qui relie la pompe 120 à l'injecteur 140, auquel on peut rajouter le volume interne de l'injecteur 140. Le volume $V_{atmo}$ peut en outre comprendre des volumes résiduels du circuit le cas échéant.

La pression $P_s$ de l'accumulateur 110 est par exemple déterminée comme la pression médiane ou moyenne entre la pression à la position haute du niveau du réducteur, et la pression à la position basse du niveau du réducteur dans l'accumulateur 110.

Dans un mode de réalisation, le procédé comprend une étape 11 de détermination de la valeur V.

Par exemple, la valeur V est estimée pour la pression moyenne ou médiane de l'accumulateur 110 en considérant une compression adiabatique. Une compression adiabatique est caractérisée par un produit $PV^\gamma$ constant, où $\gamma$ est une constante caractéristique du gaz en compression. P et V désignent respectivement la pression et le volume du gaz. Ainsi, la valeur V est donnée par la relation suivante :

$$V = \left( \frac{P_{atmo} \times V_{atmo}^{\gamma}}{P_s} \right)^{1/\gamma}$$

Dans un mode de réalisation, le procédé comprend une étape 12 de demande d'amorçage avant l'étape 13 de première fermeture de l'injecteur 140. La demande d'amorçage intervient lorsque le système SCR 100 doit être utilisé pour la réduction des gaz d'échappement du véhicule alors que le système SCR 100 contient de l'air dans au moins une de ses parties. Par exemple, la demande d'amorçage est effectuée par un utilisateur du véhicule, ou par un composant du véhicule.

Dans un mode de réalisation, le procédé comprend une étape 19 de fin d'amorçage après l'étape 18 de fermeture de l'injecteur 140. Par exemple, cette étape comprend l'indication d'une fin d'amorçage à un utilisateur du véhicule, ou à un composant du véhicule.

Le procédé d'amorçage selon l'invention est plus avantageux qu'un procédé utilisant une temporisation pour purger le système SCR 100.

En particulier, le procédé selon l'invention permet une sensibilité moindre à la contre-pression échappement. Autrement dit, le procédé permet une pression dans la canalisation 150 plus élevée par rapport à l'art antérieur. Ainsi, l'air purgé de la canalisation 150, n'est pas refoulé sous l'effet d'une pression plus élevée dans la ligne d'échappement du véhicule. Le procédé selon l'invention est donc plus robuste qu'un procédé utilisant une temporisation.

Dans le procédé selon l'invention, le temps constante de l'injecteur est plus court que dans l'art antérieur. Autrement dit, le temps d'ouverture de l'injecteur est plus court que dans l'art antérieur. Ainsi, l'injecteur présente moins de risque d'échauffement que dans un procédé de l'art antérieur, ce qui permet un amorçage sécurisé.

Dans un exemple du procédé mis en oeuvre par un système SCR 100, la pression atmosphérique $P_{atmo}$ est égale à 1 bar. Le volume $V_{atmo}$ est égal à 28,3 cm$^3$ pour une canalisation 150 de diamètre interne 3 mm et de longueur 4 m. Alternativement, le volume $V_{atmo}$ est égal 12,6 cm$^3$ pour une canalisation 150 de diamètre interne 2 mm et de longueur 4 m.

A l'étape 15 de fermeture de la canalisation 150, la mise sous pression de la canalisation 150 est rapide, par exemple de l'ordre de quelques secondes. La pression absolue du volume d'air 160 sous pression est de 6 bars. Dans une compression adiabatique le produit $PV^\gamma$ est constant. Ainsi, pour un volume $V_{atmo}$ égal à 12,6 cm$^3$, le volume d'air 160 sous pression est de 3,3 cm$^3$.

Pour un volume $V_{atmo}$ égal à 28,3 cm$^3$, le volume d'air sous pression 160 est de 7,3 cm$^3$.

A l'étape 16 d'ouverture de l'injecteur 140, le volume d'air 160 sous pression est expulsé sous une pression de 6 bars.

Dans l'exemple considéré, un seul rechargement de l'accumulateur 110 suffit pour amorcer le système SCR 100. Autrement dit, les étapes 13 à 16 ne sont pas répétées.

L'invention concerne également un système SCR 100 pour véhicule qui comprend une unité de commande (non représentée) apte à mettre en oeuvre le procédé selon l'invention. Grâce à son unité de commande, le système SCR 100 est amorcé par le procédé décrit ci-dessus.

L'invention concerne également un véhicule qui comprend un système SCR 100 selon l'invention. Ainsi, après une période d'inactivité du véhicule, le traitement des gaz d'échappement du véhicule est remis en fonctionnement rapidement et de façon sécurisée.

L'invention n'est pas limitée aux exemples présentés. Notamment, la mise sous pression du réducteur dans l'accumulateur 110, peut être obtenu par des moyens autres qu'un piston 115. Le gaz à purger peut être autre que de l'air.

## Revendications

1. Procédé d'amorçage d'un système de réduction catalytique sélective (100) pour un véhicule, le système de réduction catalytique sélective (100) comprenant une pompe (120) de réducteur, un injecteur (140) de réducteur dans une ligne d'échappement du véhicule, une canalisation (150) reliant l'injecteur (140) à la pompe (120), un accumulateur (110) de réducteur sous pression connecté à la canalisation (150), **caractérisé en ce que** le procédé comprend :

   - une première fermeture (13) de l'injecteur (140),
   - la fourniture (14) de réducteur dans la canalisation (150) à partir de la pompe (120), jusqu'au chargement de l'accumulateur (110),
   - la fermeture (15) de la canalisation (150) entre la pompe (120) et l'accumulateur (110),
   - l'ouverture (16) de l'injecteur (140) pour purger de l'air présent dans la canalisation (150) sous l'effet du réducteur sous pression présent dans l'accumulateur (110).

2. Le procédé selon la revendication 1, **caractérisé en ce que** les étapes du procédé sont répétées lorsque le niveau de réducteur dans l'accumulateur (110) atteint un niveau bas.

3. Le procédé selon la revendication 1 ou 2, **caracté-**

**risé en ce que** le procédé comprend en outre, après l'étape d'ouverture (16) de l'injecteur (140), une autre étape de fermeture (18) de l'injecteur (140) lorsque le système (100) est purgé.

4. Le procédé selon l'une des revendications 1 à 3, **caractérisé en ce que** le volume d'air purgé est estimé à l'aide du niveau de réducteur dans l'accumulateur (110).

5. Le procédé selon l'une des revendications 1 à 4, **caractérisé en ce que** l'accumulateur (110) comporte un piston (115) de mise sous pression, le niveau de réducteur dans l'accumulateur (110) étant déterminé selon la position du piston (115) dans l'accumulateur (110).

6. Le procédé selon l'une des revendications 1 à 5, **caractérisé en ce que** le système (100) est purgé lorsque le volume de réducteur utilisé pour purger la canalisation (150) atteint une valeur V fonction du volume d'air présent dans le système de réduction catalytique (100) avant la première fermeture (13) de l'injecteur (140), de la pression atmosphérique, et de la pression de l'accumulateur (110).

7. Le procédé selon la revendication 6, **caractérisé en ce que** le procédé comprend avant la première fermeture (13) de l'injecteur (140),

   - la détermination (10) du volume d'air présent dans le système de réduction catalytique (100) de la pression atmosphérique, et de la pression de l'accumulateur (110), et
   - la détermination (11) de la valeur V.

8. Le procédé selon l'une des revendications 1 à 7, **caractérisé en ce que** la fermeture (15) de la canalisation (150) entre la pompe (120) et l'accumulateur (110) est commandée par une vanne (170), ou un clapet antiretour positionné entre la pompe (120) et l'accumulateur (110).

9. Système de réduction catalytique sélective (100) pour véhicule, comprenant une pompe (120) de réducteur, un injecteur (140) de réducteur dans une ligne d'échappement du véhicule, une canalisation (150) reliant l'injecteur (140) à la pompe (120), et un accumulateur (110) de réducteur sous pression positionné sur la canalisation (150), **caractérisé en ce que** le système (100) comprend une unité de commande apte à mettre en oeuvre le procédé selon l'une des revendications 1 à 8.

10. Véhicule comprenant une ligne d'échappement **caractérisé en ce que** le véhicule comprend en outre le système de réduction catalytique sélective (100) selon la revendication 9.

**Patentansprüche**

1. Ansaugverfahren eines Systems mit selektiver katalytischer Reduktion (100) für ein Fahrzeug, wobei das System zur selektiven katalytischen Reduktion (100) eine Reduktionsmittelpumpe (120), einen Reduktionsmittelinjektor (140) in einer Abgasleitung des Fahrzeugs aufweist, eine Kanalisation (150), die den Injektor (140) mit der Pumpe (120) verbindet, einen Reduktionsmittelspeicher (110) unter Druck, der mit der Kanalisation (150) verbunden ist, **dadurch gekennzeichnet, dass** das Verfahren Folgendes aufweist:

   - ein erstes Schließen (13) des Injektors (140),
   - die Bereitstellung (14) von Reduktionsmittel in der Kanalisation (150) ausgehend von der Pumpe (120) bis zum Laden des Speichers (110),
   - das Schließen (15) der Kanalisation (150) zwischen der Pumpe (120) und dem Speicher (110),
   - das Öffnen (16) des Injektors (140), um Luft, die in der Kanalisation (150) vorhanden ist, unter der Einwirkung des Reduktionsmittels unter Druck, das in dem Speicher (110) vorhanden ist, auszutreiben.

2. Verfahren nach Anspruch 1, **dadurch gekennzeichnet, dass** die Schritte des Verfahrens wiederholt werden, bis der Reduktionsmittelfüllstand im Speicher (110) einen niedrigen Füllstand erreicht.

3. Verfahren nach Anspruch 1 oder 2, **dadurch gekennzeichnet, dass** das Verfahren außerdem nach dem Schritt des Öffnens (16) des Injektors (140) einen anderen Schritt des Schließens (18) des Injektors (140) aufweist, wenn das System (100) entlüftet wird.

4. Verfahren nach einem der Ansprüche 1 bis 3, **dadurch gekennzeichnet, dass** das entlüftete Luftvolumen mit Hilfe des Füllstands an Reduktionsmittel im Speicher (110) geschätzt wird.

5. Verfahren nach einem der Ansprüche 1 bis 4, **dadurch gekennzeichnet, dass** der Speicher (110) einen Kolben (115) zum Druckbeaufschlagen aufweist, wobei der Reduktionsmittelfüllstand in dem Speicher (110) gemäß der Position des Kolbens (115) in dem Speicher (110) bestimmt wird.

6. Verfahren nach einem der Ansprüche 1 bis 5, **dadurch gekennzeichnet, dass** das System (100) entlüftet wird, wenn das Reduktionsmittelvolumen, das zum Entlüften der Kanalisation (150) verwendet wird, einen Wert V erreicht, der von dem Luftvolumen, das in dem System zur katalytischen Reduktion (100) vor dem ersten Schließen (13) des Injektors (140) vorhanden ist, dem Luftdruck und dem Druck des Speichers (110) abhängt.

7. Verfahren nach Anspruch 6, **dadurch gekennzeichnet, dass** das Verfahren vor dem ersten Schließen (13) des Injektors (140)

   - das Bestimmen (10) des Luftvolumens aufweist, das in dem System zur katalytische Reduktion (100) vorhanden ist, des Luftdrucks und des Drucks des Speichers (110) und
   - das Bestimmen (11) des Werts V.

8. Verfahren nach einem der Ansprüche 1 bis 7, **dadurch gekennzeichnet, dass** das Schließen (15) der Kanalisation (150) zwischen der Pumpe (120) und dem Speicher (110) von einem Schieber (170) oder einem Rückschlagventil, der/das zwischen der Pumpe (120) und dem Speicher (110) positioniert ist, gesteuert wird.

9. System zur selektiven katalytischen Reduktion (100) für Fahrzeug, das eine Reduktionsmittelpumpe (120) einen Reduktionsmittelinjektor (140) in einer Abgasleitung des Fahrzeugs aufweist, eine Kanalisation (150), die den Injektor (140) mit der Pumpe (120) verbindet, und einen Reduktionsmittelspeicher (110) unter Druck, der auf der Kanalisation (150) positioniert ist, **dadurch gekennzeichnet, dass** das System (100) eine Steuereinheit aufweist, die geeignet ist, um das Verfahren nach einem der Ansprüche 1 bis 8 auszuführen.

10. Fahrzeug, das eine Abgasleitung aufweist, **dadurch gekennzeichnet, dass** das Fahrzeug außerdem das System zur selektiven katalytischen Reduktion (100) nach Anspruch 9 aufweist.

**Claims**

1. A method of priming a selective catalytic reduction system (100) for a vehicle, the selective catalytic reduction system (100) including a pump (120) of reducer, an injector (140) of reducer in an exhaust line of the vehicle, a duct (150) connecting the injector (140) to the pump (120), an accumulator (110) of reducer under pressure connected to the duct (150), **characterized in that** the method includes:

   - a first closure (13) of the injector (140),
   - the supply (14) of reducer in the duct (150) from the pump (120), up to the charging of the accumulator (110),
   - the closure (15) of the duct (150) between the pump (120) and the accumulator (110),

- the opening (16) of the injector (140) to purge air present in the duct (150) under the effect of the reducer under pressure present in the accumulator (110).

2. The method according to Claim 1, **characterized in that** the steps of the method are repeated when the level of reducer in the accumulator (110) reaches a low level.

3. The method according to Claim 1 or 2, **characterized in that** the method further includes, after the step of opening (16) of the injector (140), another step of closure (18) of the injector (140) when the system (100) is purged.

4. The method according to one of Claims 1 to 3, **characterized in that** the volume of purged air is estimated by means of the level of reducer in the accumulator (110).

5. The method according to one of Claims 1 to 4, **characterized in that** the accumulator (110) comprises a pressurization piston (115), the level of reducer in the accumulator (110) being determined according to the position of the piston (115) in the accumulator (110) .

6. The method according to one of Claims 1 to 5, **characterized in that** the system (100) is purged when the volume of reducer used to purge the duct (150) reaches a value V as a function of the volume of air present in the catalytic reduction system (100) before the first closure (13) of the injector (140), of the atmospheric pressure, and of the pressure of the accumulator (110).

7. The method according to Claim 6, **characterized in that** the method includes before the first closure (13) of the injector (140),

   - the determination (10) of the volume of air present in the catalytic reduction system (100) of the atmospheric pressure, and of the pressure of the accumulator (110), and
   - the determination (11) of the value V.

8. The method according to one of Claims 1 to 7, **characterized in that** the closure (15) of the duct (150) between the pump (120) and the accumulator (110) is controlled by a valve (170), or a non-return valve positioned between the pump (120) and the accumulator (110) .

9. A selective catalytic reduction system (100) for a vehicle, including a pump (120) of reducer, an injector (140) of reducer in an exhaust line of the vehicle, a duct (150) connecting the injector (140) to the pump (120), and an accumulator (110) of reducer under pressure positioned on the duct (150), **characterized in that** the system (100) includes a control unit able to implement the method according to one of Claims 1 to 8.

10. A vehicle including an exhaust line, **characterized in that** the vehicle further includes the selective catalytic reduction system (100) according to Claim 9.

**Fig.1**

**Fig.2**

**Fig.3**

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2925581 A
- US 6209315 B
- US 6550250 B
- US 20050252201 A